Europäisches Patentamt

European Patent Office

Office européen des brevets

(11) Numéro de publication : **0 323 317 B1**

(12) **FASCICULE DE BREVET EUROPEEN**

(45) Date de publication du fascicule du brevet :
29.07.92 Bulletin 92/31

(51) Int. Cl.$^5$ : **G02B 6/00**

(21) Numéro de dépôt : **88403267.3**

(22) Date de dépôt : **21.12.88**

(54) *Procédé de fabrication de microguides de lumière à faibles pertes de propagation optique par dépôt de multicouches.*

(30) Priorité : **24.12.87 FR 8718155**

(43) Date de publication de la demande :
05.07.89 Bulletin 89/27

(45) Mention de la délivrance du brevet :
29.07.92 Bulletin 92/31

(84) Etats contractants désignés :
**CH DE GB IT LI NL SE**

(56) Documents cités :
**GB-A- 2 066 805**
**PATENT ABSTRACTS OF JAPAN, vol. 11, no. 87 (P-557)[2534], 17 mars 1987; & JP-A-61 240 207**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Valette, Serge 41, rue des Eaux Claires F-38100 Grenoble (FR)**

(74) Mandataire : **Mongrédien, André et al c/o BREVATOME 25, rue de Ponthieu F-75008 Paris (FR)**

# EP 0 323 317 B1

## Description

La présente invention se rapporte aux microguides de lumière qui sont des structures dans lesquelles de l'énergie électromagnétique est enfermée et circule selon des modes propres au champ électromagnétique qui dépendent à la fois des dimensions et des indices de réfraction du microguide et de la longueur d'onde de la radiation électromagnétique véhiculée. Bien entendu, l'appellation microguide de lumière n'est pas limitée à la lumière visible et peut s'étendre aux radiations infrarouges ou ultraviolettes.

La principale qualité d'un tel microguide de lumière est de fonctionner avec les pertes optiques les plus faibles possibles, en d'autres termes de restituer à la sortie une énergie électromagnétique aussi voisine que possible de celle qui a été injectée à l'entrée.

La présente invention concerne plus spécialement, parmi les microguides, ceux que l'on réalise par dépôt de couches multiples. Ces microguides comportent au moins trois couches superposées de matériaux dont une (la couche centrale dans le cas de trois couches) comporte un indice de réfraction supérieur aux deux autres, cette couche sera appelée dans le reste du texte couche guide. Ces différentes couches sont réalisées de façon connue, par exemple à l'aide d'un dépôt chimique en phase vapeur assisté par plasma notamment quand il s'agit de silice $SiO_2$, (technique connue en terminologie anglo-saxonne sous le sigle PECVD) ou par d'autres procédés de dépôts chimiques en phase vapeur telle que l'hydrolyse à la flamme et le dépôt chimique en phase vapeur à basse pression notamment lorsqu'il s'agit de nitrure de silicium $Si_3N_4$ (technologie désignée en terminologie anglo-saxonne par le sigle LPCVD). L'invention concerne également les structures multicouches que l'on peut obtenir par pulvérisation cathodique ou par évaporation sous vide.

Par ailleurs, de manière générale, lorsque ces couches ont le même constituant de base, par exemple la silice, pour avoir une différence d'indice de réfraction, on effectue un dopage d'une, de plusieurs, ou de toutes ces couches par des méthodes connues parmi lesquelles on peut citer l'utilisation de réactions chimiques en présence de gaz réactifs, l'implantation ionique et la diffusion d'ions ou d'atomes divers.

On commencera, pour la bonne compréhension de l'invention, par un rappel des procédés classiques de fabrication de microguides de lumière en prenant l'exemple d'un microguide réalisé à partir de silice $SiO_2$ et l'on expliquera ensuite les défauts de ces microguides que le procédé objet de l'invention permet précisément de pallier.

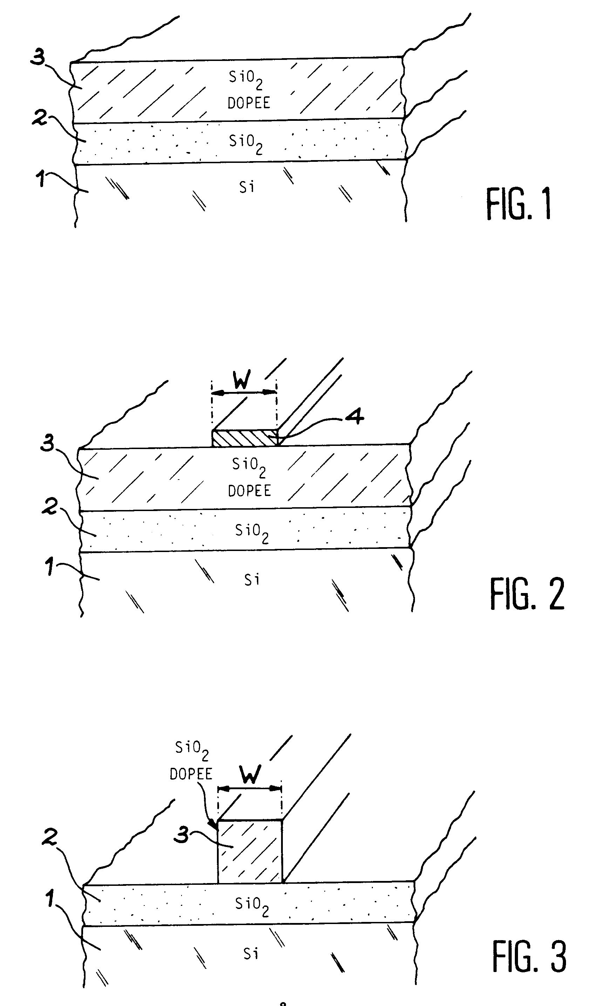

La description de l'art antérieur connu dans ce domaine de la fabrication de microguides sera rappelée en se référant aux figures 1 à 5 ci-jointes qui représentent les différentes étapes successives d'une telle fabrication connue.

Sur la figure 1, on a représenté schématiquement un substrat 1 par exemple en silicium sur lequel sont déposées, de façon également connue, deux couches successives de silice $SiO_2$, à savoir par exemple une première couche de silice naturelle 2 et une seconde couche de silice dopée 3. La couche de silice 3 devant avoir un indice de réfraction supérieur à celui de la couche 2, la couche 3 est dopée par un dopant permettant d'augmenter l'indice de la silice tel que par exemple, du phosphore ou du germanium ou encore du titane. Par ailleurs, le substrat 1 en silicium peut être remplacé par un substrat en verre ou en silice ou par tout autre matériau sur lequel on peut réaliser des dépôts.

L'étape suivante connue de réalisation du microguide est visible sur la figure 2 sur laquelle on retrouve les couches précédentes 1, 2 et 3 et où l'on illustre la réalisation d'un masque protecteur 4 sous forme d'une bande de largeur W à la surface de la couche de silice 3 permettant la gravure ultérieure de cette dernière. Le matériau constituant ce masque peut être notamment en résine photosensible ou en métal.

L'étape suivante représentée sur la figure 3 consiste à graver la couche 3 de $SiO_2$ dopée au travers du masque protecteur 4, ce qui conduit à la réalisation de la couche guide proprement dite du microguide sous la forme d'un barreau 3 de section rectangulaire en silice dopée, et à éliminer le masque.

Dans les trois figures 1, 2, et 3, la couche 2 a un indice de réfraction n et la couche 3, un indice $n+\Delta n_1$.

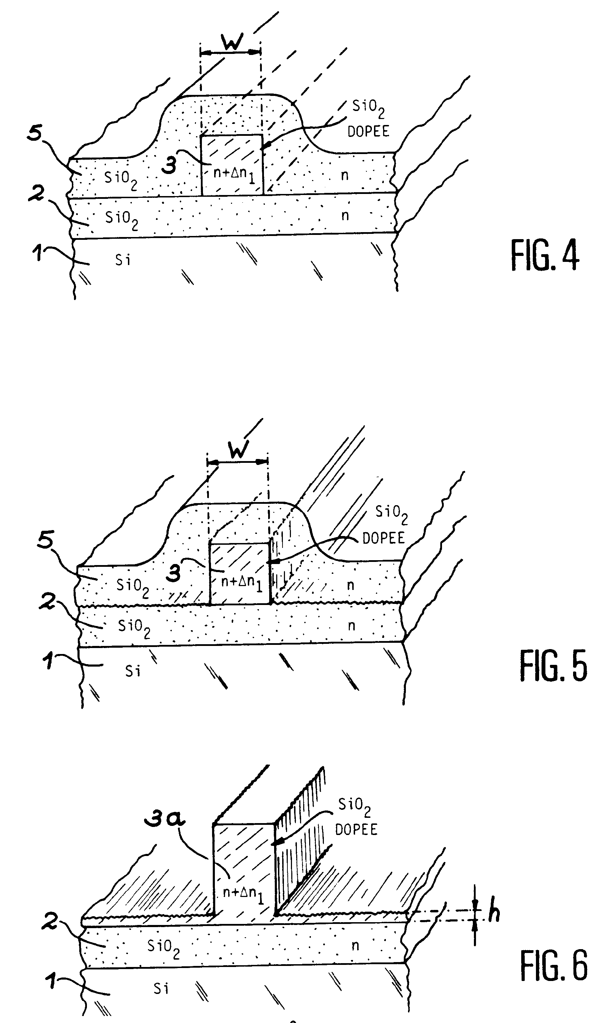

Sur la figure 4 suivante, on a représenté la dernière étape de fabrication qui consiste à recouvrir l'ensemble de la structure de la figure 3 d'une couche 5 de silice $SiO_2$ d'indice de réfraction $n+\Delta n_2$, avec $\Delta n_2 < \Delta n_1$ ou encore d'indice de réfraction $n - \Delta n_2$, avec dans ce cas $\Delta n_2 < \Delta n_1$ ou $\Delta n_2 > \Delta n_1$. Le plus souvent d'ailleurs, les couches de silice 2 et 5 ont le même indice n et le microguide 3 a l'indice de réfraction $n+\Delta n_1$ ; l'essentiel est, dans tous les cas de figures envisageables, que la couche 3 servant effectivement de couche guide ait un indice de réfraction supérieur à la fois à celui de la couche 2 et à celui de la couche 5, de façon à réaliser le piégeage recherché de l'onde électromagnétique lumineuse. En d'autres termes, les couches 2 et 5 peuvent être simplement des couches de silice non dopées ou si ce sont des couches de silice dopées, elles doivent l'être de façon plus faible que ne l'est la couche 3 constituant le microguide. Les couches 2 et 5 pourraient être également ment des couches de silice dopées par des dopants tels que le bore ou le fluor, permettant de diminuer l'indice de réfraction de la silice ; dans ce cas, la couche 3 pourrait être en silice naturelle.

Un exemple de ce que l'on vient de décrire comme état de la technique peut être trouvé dans le document

2

GB-A-2 066 805 qui décrit, en référence à ses figures 18A à 18E et à ses pages 9 et 10, la réalisation d'un guide d'ondes à trois couches en verres de silice, dopées différemment.

Les microguides de lumière connus ainsi réalisés présentent des pertes de propagation optique d'intensité diverse selon leur constitution, mais souvent trop élevée pour certaines applications. En particulier, les pertes de tels microguides augmentent très fortement lorsque la largeur W de la couche guide 3 décroît et l'on peut dire notamment que lorsque la variation d'indice $\Delta n_1$ entre la couche guide et les couches adjacentes est de quelques $10^{-3}$, les pertes augmentent très vite lorsque W est égal ou inférieur à une valeur de 5 à 6 micromètres.

La raison de cette augmentation importante des pertes est connue et elle a deux causes essentielles qui sont les suivantes :

– d'une part, les processus de gravure de la couche guide conduisent à des défauts de surface des couches 2 et 3 qui peuvent être d'ailleurs plus ou moins importants selon les modes de gravure utilisés (gravure ionique, gravure ionique réactive, gravure chimique, etc.), selon également les conditions de gravure, (nature des gaz utilisés lors d'une gravure ionique réactive, nature de la solution chimique d'attaque utilisée lors d'une gravure chimique) ainsi que selon les types de matériaux protecteurs utilisés pour la réalisation du masque 4.

– d'autre part, la diminution de la dimension W de la couche guide 3 entraîne une évolution de fonctionnement du système vers un mode guidé dont le nombre de réflexions totales dans la couche guide augmente. Il s'ensuit par conséquent davantage d'interactions avec les défauts de surface précédemment mentionnés et par conséquent une augmentation relative des pertes optiques.

Pour illustrer les défauts de surface de l'art connu dont on vient de parler, on voudra bien se référer à la figure 5 qui représente la même structure que celle de la figure 4 mais sur laquelle on a fait figurer par des ondulations réparties sur les surfaces latérales de la couche guide 3 et sur l'interface entre les couches 2 et 5, les irrégularités de jonction entre ces différentes couches qui traduisent en fait le résultat final réellement obtenu par les procédés qui viennent d'être décrits.

La présente invention a précisément pour objet un procédé de fabrication de microguides de lumière à plus faible perte de propagation optique par dépôt de multicouches qui permet, par une méthode simple et efficace de minimiser l'importance des conséquences des défauts de gravure précédemment décrits et représentés sur la figure 5.

Ce procédé de fabrication de microguides de lumière à faibles pertes de propagation optique par dépôt de multicouches, comprenant, déposées dans cet ordre sur un substrat, une première couche d'indice n, une deuxième couche guide proprement dite, d'indice $n+\Delta n_1$ et une troisième couche de couverture des deux précédentes, d'indice $n\pm\Delta n_2$ avec $\Delta n_2 < \Delta n_1$, se caractérise en ce que la deuxième couche guide (3) est fabriquée en trois étapes successives comportant :

– une première étape de dépôt d'une première sous-couche (3a) ;

– une deuxième étape d'ablation partielle de la première sous-couche à travers un masque protectif approprié couvrant toute partie destinée à former le microguide, du reste de la première sous-couche (3a) de façon que toute la partie non masquée de la première sous-couche soit réduite à une épaisseur, comptée à partir de l'interface située entre la première couche et la première sous-couche, égale à h, h valant au moins l'incertitude sur la précision de la gravure de façon à ne pas atteindre l'interface première couche (2)-deuxième couche (3) ;

– une troisième étape de dépôt d'une deuxième sous-couche (3b) en un matériau ayant le même indice $n+\Delta n_1$ que la première sous-couche (3a) précédente, et surmontant celle-ci d'une hauteur h′ suffisante pour absorber et effacer les défauts de gravure sur la surface des régions gravées, l'épaisseur totale h+h′ de la partie gravée de la deuxième couche guide (3) devant être compatible avec le fonctionnement du microguide, c'est-à-dire que l'épaisseur doit être assez faible pour que l'énergie lumineuse pouvant être éventuellement guidée dans cette région ne puisse pas se propager, cependant que l'énergie lumineuse puisse se propager dans la partie non gravée de la deuxième couche.

Autrement dit, l'épaisseur h + h′ doit être assez faible pour que l'énergie lumineuse pouvant être éventuellement guidée dans cette région ne puisse pas se propager. (Cela signifie que l'épaisseur h + h′ est soit inférieure à l'épaisseur de coupure associée au guide planaire ainsi constitué, soit que l'onde évanescente associée au mode guidé de ce guide planaire peut être absorbée par le substrat si celui-ci n'est pas transparent à la longueur d'onde de travail ou absorbée par une couche absorbante (métallique) déposée intentionnellement sur la structure terminée au-dessus de la couche 5.

Pour l'essentiel, on aura compris que le procédé objet de l'invention repose sur la fabrication de la deuxième couche guide 3 en deux étapes successives correspondant à deux sous-couches superposées de même indice, identifiables et séparées précisément par les défauts de gravure que l'on veut minimiser (sauf bien entendu sur la partie masquée de la couche 3a).

Selon l'invention, la première étape de gravure de la couche 3 est celle de la première sous-couche 3a qui s'arrête à une hauteur h au-dessus de la surface de la couche 2, la surface gravée de cette sous-couche 3a présentant les mêmes défauts que les couches 2 et 3 de l'art antérieur.

Conformément à l'invention, on s'affranchit des défauts de surface précédents en venant déposer sur la sous-couche 3a, une deuxième sous-couche 3b dans un matériau de même indice n+ $n_1$ que la sous-couche 3a. Cette deuxième sous-couche 3b est dotée d'une épaisseur h' suffisante pour absorber sans les reproduire les défauts de gravure situés à l'interface des sous-couches 3a et 3b, l'épaisseur h + h' étant suffisamment faible par ailleurs pour être compatible avec le fonctionnement du micro-guide.

Enfin, l'ensemble précédent est recouvert d'une couche 5 d'indice de réfraction inférieur à celui des sous-couches 3a et 3b, comme c'était le cas de la couche 5 dans l'art antérieur décrit sur les figures 1 à 5.

De toute façon, l'invention sera mieux comprise en se référant à la description qui suit d'un exemple de mise en oeuvre particulier, donné à titre indicatif et non limitatif, du procédé de fabrication de microguides objet de l'invention.

Cette description sera faite en se référant aux figures schématiques 6 à 9 suivantes, dans lesquelles :
– la figure 6 montre le dépôt de la première sous-couche dopée du microguide de lumière,
– la figure 7 montre le dépôt de la deuxième sous-couche du micro-guide de lumière,
– la figure 8 montre le dépôt de la troisième couche de couverture 5 du microguide de lumière, et
– la figure 9 explique l'application du procédé selon l'invention à la réalisation d'une couche guide de largeur W et de hauteur H.

La figure 10 montre enfin le dépôt d'une couche absorbante métallique supplémentaire par rapport aux structures des figures 8 et 9.

Dans l'exemple de mise en oeuvre décrit en se référant aux figures 6 à 9, le substrat 1 est par exemple en silicium et les couches 2, 3a, 3b et 5 en silice $SiO_2$, les couches 2 et 5 ayant un indice n et les sous-couches 3a et 3b ayant un indice n+ $\Delta n_1$. Il s'agit bien entendu d'un cas particulier intéressant de mise en oeuvre de la présente invention, mais comme il sera exposé plus loin, d'autres triades de matériaux ou de dopages peuvent également être utilisées selon les cas particuliers d'application de l'invention.

Sur la figure 6, on a représenté le substrat de silicium 1 sur lequel sont déposées successivement la première couche 2 de silice $SiO_2$ d'indice n et la première sous-couche 3a d'indice n + $\Delta n_1$. Cette couche 3a a été gravée partiellement par tout moyen connu à travers un masque approprié. L'épaisseur restante de la partie gravée de la couche 3a, comptée à partir de l'interface couche 2 - couche 3a est égale à h. Dans le cas particulier décrit, la valeur de h peut être par exemple comprise entre 0,1 et 0,5 micromètre ; l'essentiel est, en fait que l'on soit sûr de ne pas atteindre l'interface entre les couches 2 et 3a lors de la gravure précédente. La précision de ce type de gravure étant, compte tenu des inhomogénéités des dépôts, de l'ordre de 5% de l'épaisseur de la couche 3a, on peut choisir pour h une valeur égale à 0,25 micromètre lorsque l'épaisseur de la première sous-couche 3a est égale à 5 micromètres.

Sur la figure 6, on a représenté schématiquement par des ondulations graphiques les défauts de surface inévitables, existant à ce stade de la réalisation, sur les régions gravées de la première couche 3a.

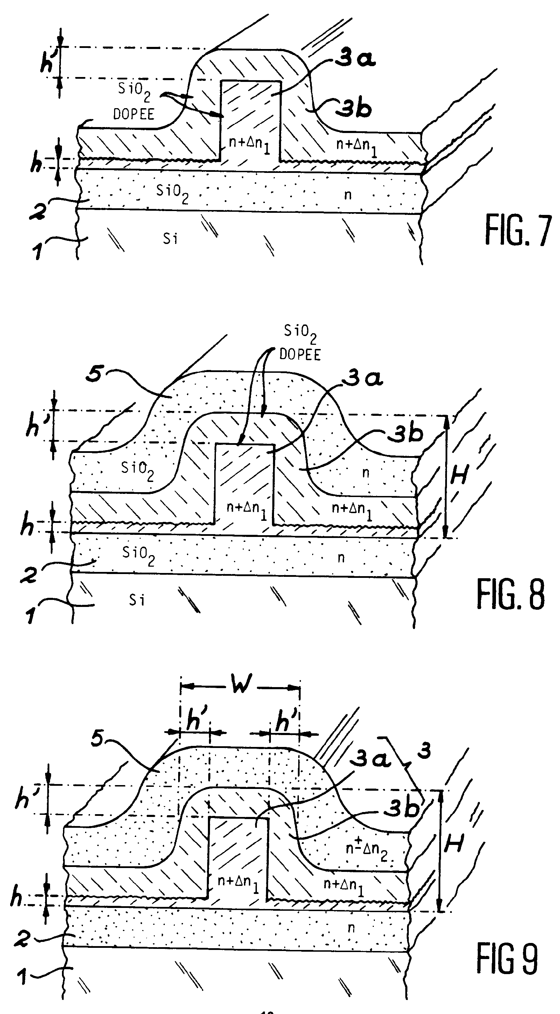

La figure 7 représente ensuite la seconde étape de dépôt d'un matériau de même indice que celui de la première couche 3a et qui recouvre cette dernière d'une hauteur h'. Dans l'exemple décrit, cette deuxième sous-couche 3b est réalisée, comme la première sous-couche 3a, en silice $SiO_2$ dopée, d'indice n+$\Delta n_1$. Le choix de l'épaisseur h' résulte d'un compromis entre deux exigences opposées, à savoir la nécessité pour h' d'être suffisante pour absorber et effacer les défauts de surface de la première sous-couche 3a, et la nécessité pour h + h' de ne pas être trop élevée pour être compatible avec le fonctionnement du microguide 3. Dans l'exemple décrit, l'épaisseur h' est comprise entre 0,5 et 2 micromètres et $\Delta n_1$ est de l'ordre de $5.10^{-3}$. La hauteur h de la partie gravée de la première sous-couche 3a est de l'ordre de 5% de l'épaisseur de la première sous-couche 3a.

La figure 8 représente enfin l'étape finale de fabrication qui consiste en un dernier dépôt d'une couche 5 de silice $SiO_2$ du même type que celle décrite figure 4, dont l'épaisseur est en général de quelques micromètres, l'exigence principale quant à cette épaisseur résultant de la nécessité qu'elle soit plus épaisse que la profondeur de l'onde évanescente associée au mode guidé.

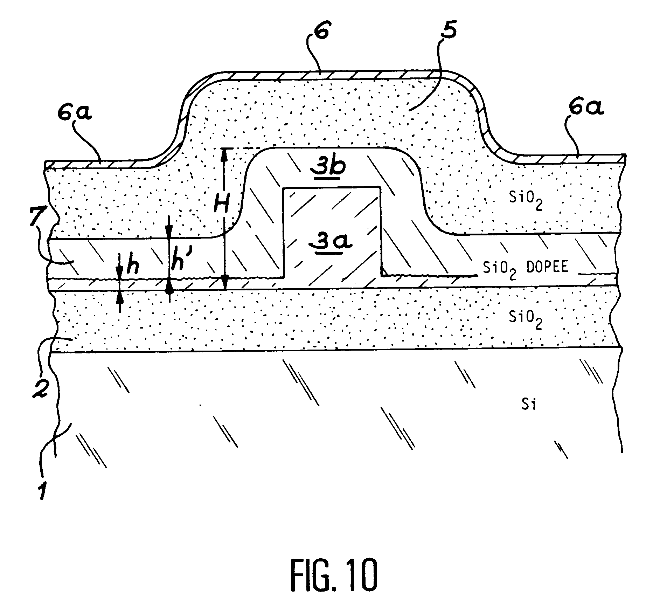

En se référant maintenant à la figure 9, on va décrire les modalités pratiques de mise en oeuvre du procédé objet de l'invention lorsque l'on veut réaliser une couche-guide dont les dimensions sont W pour la largeur et H pour la hauteur. Comme on le comprendra en se référant à cette figure 9, les opérations nécessaires consistent :

a) - à déposer sur la première couche 2 d'indice de réfraction n, une sous-couche 3a d'indice n+ $\Delta n_1$, d'épaisseur H-h' ;

b) - à graver partiellement la première sous-couche 3a en matériau d'indice n+$\Delta n_1$ sous forme d'un motif de largeur W-2h' jusqu'à ce que la partie gravée ait une épaisseur h ;

c) - à déposer la seconde sous-couche 3b en matériau de même indice de réfraction que le matériau de la couche 3a et, d'épaisseur générale h' ;

d) - à compléter l'ensemble des dépôts précédents par une couche 5 de matériau d'indice de réfraction n $\pm \Delta n_2$ inférieur à celui des couches 3a et 3b, par dessus la seconde sous-couche 3b.

Selon l'invention, les matériaux constitutifs des trois couches 2, 3 et 5 peuvent être choisis notamment parmi les triades de corps suivants :

$$SiO_2, SiO_2 \text{ dopé}^+, SiO_2;$$
$$SiO_2 \text{ dopé}^-, SiO_2, SiO_2 \text{ dopé}^-;$$
$$SiO_2, Si_3N_4, SiO_2;$$
$$SiO_2, ZnO, SiO_2;$$
$$SiO_2, Si_3N_4, Al_2O_3,$$
$$SiO_2, SiON, SiO_2.$$

Dans ces exemples, les sous-couches 3a et 3b de la couche 3, sont de même nature.

Par ailleurs, on entend par "dopé$^+$" un dopage qui conduit à une augmentation de l'indice de réfraction du matériau de base et "dopé$^-$", un dopage qui conduit à une diminution de l'indice de réfraction du matériau de base.

Lorsque le matériau constitutif de la couche guide est du nitrure de silicium $Si_3N_4$ ou de l'oxyde de zinc ZnO, intercalé entre deux couches de silice, il est avantageux de choisir pour la hauteur H de la couche guide une valeur comprise entre 0,05 et 0,2 micromètre, une épaisseur h entre 0,02 $\mu m$ et 0,08$\mu m$, la différence d'indice $\Delta n_1$ étant voisine de 0,55.

Parmi les avantages du procédé de fabrication objet de l'invention, on peut noter les points suivants :

a) - l'importance des défauts de gravure de la première sous-couche 3a qui sont bien entendu inévitables, se trouve minimisée, car à l'interface des sous-couches 3a et 3b, la variation d'indice de réfraction est nulle puisque les deux sous-couches ont le même indice de réfraction ;

b) - la couche guide 3 a des angles arrondis et possède un profil de mode guidé plus proche de celui des fibres optiques monomodes à symétrie circulaire, ce qui permet un couplage plus facile entre les microguides obtenus par le procédé objet de l'invention et les fibres optiques monomodes précédentes ;

c) - pour une dimension donnée H de hauteur de la couche guide, la profondeur de la gravure à effectuer n'est que de H-h-h', au lieu de H correspondant à la profondeur de gravure nécessaire dans les méthodes de l'art antérieur, ce qui conduit à un gain de temps non négligeable et à une pollution réduite du bâti.

Selon un mode de réalisation préféré de l'invention, on choisit pour la couche guide de lumière une largeur W sensiblement égale à sa hauteur H, ce qui est un choix spécialement bien adapté au cas où l'on utilise les microguides de lumière sous forme couplée avec des fibres optiques.

La figure 10 montre enfin l'utilisation d'une couche absorbante complémentaire 6, par exemple métallique, pour éviter de propager de la lumière parasite en dehors du microguide (dont la couche guide est d'épaisseur H) dans le guide planaire d'épaisseur h + h'.

L'épaisseur d'une telle couche est liée à l'invention, dans la mesure où dans l'art antérieur h + h' = 0 et la lumière ne peut donc se propager dans le guide planaire qui de ce fait n'existe pas.

La couche absorbante, par exemple métallique, 6 peut être limitée aux régions 6a situées à gauche et à droite de la figure 10, au-dessus du guide planaire 7 d'épaisseur h + h' ou ne pas être limitée du tout et être alors continue. Dans ce dernier cas, cela suppose bien sûr que l'épaisseur de la couche 5 de $SiO_2$ surplombant la couche guide 3 soit suffisante pour que la lumière guidée dans cette couche guide 3 ne soit pas absorbée dans la couche absorbante 6.

## Revendications

1. Procédé de fabrication de microguides de lumière à faibles pertes de propagation optique par dépôt de multicouches, comprenant, déposées dans cet ordre sur un substrat (1), une première couche (2) d'indice n, une deuxième couche guide (3) proprement dite, d'indice $n+\Delta n_1$ et une troisième couche (5) de couverture des deux précédentes, d'indice $n\pm \Delta n_2$, avec $\Delta n_2 < \Delta n_1$, caractérisé en ce que la deuxième couche guide (3) est fabriquée en trois étapes successives comportant :

– une première étape de dépôt d'une première sous-couche (3a) ;

– une deuxième étape d'ablation partielle de la première sous-couche à travers un masque protectif approprié couvrant toute partie destinée à former le micro-guide, du reste de la première sous-couche (3a) de façon que toute la partie non masquée de la première sous-couche soit réduite à une épaisseur, comptée à partir de l'interface située entre la première couche et la première sous-couche, égale à h, h valant au moins l'incertitude sur la précision de la gravure de façon à ne pas atteindre l'interface première couche (2)-deuxième couche (3) ;

– une troisième étape de dépôt d'une deuxième sous--couche (3b) en un matériau ayant le même indice $n+\Delta n_1$ que la première sous-couche (3a) précédente, et surmontant celle-ci d'une hauteur h′ suffisante pour absorber et effacer les défauts de gravure sur la surface des régions gravées, l'épaisseur totale h+h′ de la partie gravée de la deuxième couche guide (3) devant être compatible avec le fonctionnement du microguide, c'est-à-dire que l'épaisseur doit être assez faible pour que l'énergie lumineuse pouvant être éventuellement guidée dans cette région ne puisse pas se propager, cependant que l'énergie lumineuse puisse se propager dans la partie non gravée de la deuxième couche.

2. Procédé de fabrication de microguides de lumière selon la revendication 1, caractérisé en ce que le substrat (1) est en silicium et les trois couches (2, 3, 5) en silice, les première (2) et troisième couches (5) ayant le même indice n et la deuxième couche guide (3) étant dopée et ayant l'indice $n+\Delta n_1$, avec $\Delta n_1$ de l'ordre de $5.10^{-3}$, h étant de l'ordre de 5% de l'épaisseur de la première sous-couche (3a) et h′ compris entre 0,5 et 2 μm.

3. Procédé de fabrication de microguides de lumière selon la revendication 1, caractérisé en ce que l'on choisit les matériaux constitutifs des trois couches (2, 3, 5) parmi les triades de corps suivants :

$$SiO_2, \; SiO_2 \; dopé^+_2, \; SiO_2 \; ;$$
$$SiO_2 \; dopé^-, \; SiO_2, \; SiO_2 \; dopé^- \; ;$$
$$SiO_2, \; Si_3N_4 \; SiO_2 \; ;$$
$$SiO_2, \; ZnO, \; SiO_2 \; ;$$
$$SiO_2, \; Si_3N_4, \; Al_2O_3,$$
$$SiO_2, \; SiON, \; SiO_2.$$

4. Procédé de fabrication de microguides de lumière selon la revendication 1, caractérisé en ce que la couche guide de lumière a une largeur W sensiblement égale à sa hauteur H.

5. Procédé de fabrication de microguides de lumière selon la revendication 3, caractérisé en ce que le matériau de la couche guide (3) étant choisi parmi le nitrure de silicium $Si_3N_4$ ou de l'oxyde de zinc ZnO, la hauteur H de la couche guide (3) est comprise entre 0,05 et 0,2 μm, l'épaisseur h entre 0,02 μm et 0,08 μm.

6. Procédé de fabrication de microguides de lumière selon la revendication 1, caractérisé en ce que l'on complète la structure par le dépôt d'une couche absorbante (6) sur la troisième couche (5) de couverture.


## Patentansprüche

1. Verfahren zum Herstellen von Mikrolichtleitern mit geringen optischen Ausbreitungsverlusten durch Aufbringen von Mehrfachschichten, die in dieser Reihenfolge auf einem Substrat (1) aufgebracht umfassen: eine erste Schicht (2) mit Index n, eine zweite, eigentliche Leiterschicht (3) mit Index $n+\Delta n_1$ und eine dritte, die beiden vorhergehenden abdeckende Schicht mit Index $n\pm\Delta n_2$, wobei $\Delta n_2 < \Delta n_1$, dadurch gekennzeichnet, daß die zweite Leiterschicht (3) in drei aufeinanderfolgenden Schritten hergestellt wird, die umfassen:

– einen ersten Schritt zum Aufbringen einer ersten Unterschicht (3a);

– einen zweiten Schritt zum teilweisen Entfernen der ersten Unterschicht durch eine geeignete, schützende Maske, die den gesamten Teil bedeckt, der dazu bestimmt ist, den Mikroleiter zu bilden, von dem Rest der ersten Unterschicht (3a) in solcher Weise, daß der gesamte nicht maskierte Teil der ersten Unterschicht auf eine Dicke reduziert wird, die, gezahlt von der Grenzfläche, die sich zwischen der ersten Schicht und der ersten Unterschicht befindet, gleich h ist, wobei h wenigstens die Unsicherheit in der Ätzgenauigkeit beträgt, damit nicht die Grenzfläche erste Schicht (2)-zweite Schicht (3) erreicht wird;

– einen dritten Schritt zum Aufbringen einer zweiten Unterschicht (3b) aus einem Material mit demselben Index $n+\Delta n_1$ wie die vorhergehende erste Unterschicht (3a), die diese um einen Höhe h′ übersteigt, die ausreicht, um Ätzfehler auf der Oberfläche der geätzten Bereiche zu absorbieren und zu beseitigen, wobei die gesamte Dicke h+h′ des geätzten Teils der zweiten Leiterschicht (3) mit dem Funktionieren des Mikroleiters kompatibel sein muß, das heißt, daß die Dicke gering genug sein muß, damit die Strahlungsenergie, die eventuell in diesen Bereich geführt werden kann, sich nicht ausbreiten kann, während die Strahlungsenergie sich in dem nicht geätzten Teil der zweiten Schicht ausbreiten kann.

2. Verfahren zum Herstellen von Mikrolichtleitern nach Anspruch 1, dadurch gekennzeichnet, daß das Substrat (1) aus Silizium besteht und daß die drei Schichten (2, 3, 5) aus Siliziumoxyd bestehen, wobei die ersten (2) und dritten (5) Schichten denselben Brechungsindex n besitzen und die zweite Schicht (3) dotiert ist und den Index $n+\Delta n_1$ besitzt, mit $\Delta n_1$ in der Größenordnung $5.10^{-3}$, wobei h in der Größenordnung von 5% der Dicke der ersten Unterschicht (3a) liegt und h′ zwischen 0,5 und 2 μm liegt.

3. Verfahren zur Herstellung von Mikrolichtleitern nach Anspruch 1, dadurch gekennzeichnet, daß man die Materialien, die die drei Schichten (2, 3, 5) bilden, aus den folgenden Triaden auswählt:

$$SiO_2, SiO_2 dotiert^+_2, SiO_2;$$
$$SiO_2 dotiert^-, SiO_2, SiO_2 dotiert^-;$$
$$SiO_2, Si_3N_4, SiO_2;$$
$$SiO_2, ZiO, SiO_2;$$
$$SiO_2, Si_3N_4, Al_2O_3;$$
$$SiO_2, SiON, SiO_2.$$

4. Verfahren zur Herstellung von Mikrolichtleitern nach Anspruch 1, dadurch gekennzeichnet, daß die Lichtleiterschicht eine Breite W im wesentlichen gleich ihrer Höhe H besitzt.

5. Verfahren zur Herstellung von Mikrolichtleitern nach Anspruch 3, dadurch gekennzeichnet, daß das Material der Leiterschicht (3) ausgewählt wird aus dem Siliziumnitrid $Si_3N_4$ oder dem Zinkoxyd ZnO, wobei die Höhe H der Leiterschicht (3) zwischen 0,05 und 0,2 $\mu$m liegt, wobei die Dicke h zwischen 0,02 und 0,08 $\mu$m liegt.

6. Verfahren zur Herstellung von Mikrolichtleitern nach Anspruch 1, dadurch gekennzeichnet, daß man die Struktur durch Aufbringen einer absorbierenden Schicht (6) auf der dritten abdeckenden Schicht (5) vervollständigt.

## Claims

1. Process for the production of light microguides with low optical propagation losses by multilayer deposition comprising, deposited in said order on a substrate (1), a first layer (2) of index n, a second guide layer (3) of index $n+\Delta n_1$ and a third layer (5) covering the two preceding layers of index $n\pm\Delta n_2$, with $\Delta n_2 < \Delta n_1$, characterized in that the second guide layer (3) is produced in three successive stages comprising

– a first stage of depositing a first intermediate layer (3a),

– a second stage of partly removing the first intermediate layer through an appropriate protective mask overing the entire part which will form the microguide from the remainder of the first intermediate layer (3a), so that all the unmasked part of the first intermediate layer is reduced to a thickness, starting from the interface between the first layer and the first intermediate layer, equal to h, h being at least the uncertainty on the accuracy of the etching, so as not to reach the interface between the first layer (2) and the second layer (3),

– a third stage of depositing a second intermediate layer (3b) of a material having the same index $n+\Delta n_1$ as the first preceding intermediate layer (3a) and surmounting the latter by a height h' sufficient to absorb and cancel out the etching defects on the surface of the etched regions, the total thickness h+h' of the etched part of the second guide layer (3) being compatible with the operation of the microguide, i.e. the thickness must be relatively small so that the light energy which may be guided in said region cannot be propagated, but the light energy can propagate in the unetched part of the second layer.

2. Process for the production of light microguides according to claim 1, characterized in that the substrate (1) is of silicon and the three layers (2, 3, 5) of silica, the first (2) and third (5) layers having the same index n and the second guide layer (3) being doped and having the index $n+\Delta n_1$, with $\Delta n_1$ being approximately $5.10^{-3}$, h being approximately 5% of the thickness of the first intermediate layer (3a) and h' being between 0,5 and 2 $\mu$m.

3 Process for the production of light microguides according to claim 1, characterized in that the constituent materials of the three layers (2,3,5) are chosen from among the followingtriads:
$$SiO_2, doped^+_2 SiO_2, SiO_2;$$
$$doped^- SiO_2, SiO_2, doped^-SiO_2;$$
$$SiO_2, Si_3N_4, SiO_2;$$
$$SiO_2, ZnO, SiO_2;$$
$$SiO_2, Si_3N_4, Al_2O_3;$$
$$SiO_2, SiON, SiO_2.$$

4. Process for the production of light microguides according to claim 1, characterized in that the light guide layer has a width W substantially equal to its height H.

5. Process for the production of light microguides according to claim 3, characterized in that with the material of the guide layer (3) being chosen from among silicon nitride $Si_3N_4$ or zinc oxide ZnO, the height of the guide layer (3) is between 0,05 and 0,2 $\mu$m and the thickness h between 0,02 and 0,08 $\mu$m.

6. Process for the production of light microguides according to claim 1, characterized in that the structure is completed by the deposition of an absorbing layer (6) on the third covering layer (5).

**3**

SiO$_2$ DOPEE

**2**

SiO$_2$

**1**

Si

FIG. 1

W

**4**

**3**

SiO$_2$ DOPEE

**2**

SiO$_2$

**1**

Si

FIG. 2

SiO$_2$ DOPEE

W

**2**

**3**

**1**

SiO$_2$

Si

FIG. 3

FIG. 4

FIG. 5

FIG. 6

FIG. 7

FIG. 8

FIG 9

FIG. 10